# EUROPEAN PATENT APPLICATION

(11) **EP 4 686 966 A1**
(43) Date of publication of application: **04.02.2026**
(21) Application number: 25192551.7
(22) Date of filing: 29.07.2025
(51) Int. Cl.: G02B 6/32, G02B 6/38

(54) **FIBER OPTIC CONNECTOR FOR TERMINATING AND SEALING A HOLLOW-CORE OPTICAL FIBER AND FIBER OPTIC CABLE ASSEMBLY HAVING SUCH A CONNECTOR**

(30) Priority: 31.07.2024 US 202463677583 P
(71) Applicant: Corning Research & Development Corporation, Corning, New York 14831 (US)
(72) Inventor: ROSSON, Joel Christopher, Hickory, 28601 (US)
(74) Representative: Reddie & Grose LLP

(57) **Abstract**

A fiber optic connector for terminating a hollow-core optical fiber is disclosed. The fiber optic connector includes a ferrule having a proximal end, a distal end, and at least one fiber bore extending therebetween for receiving the hollow-core optical fiber. The fiber optic connector further includes a terminus having a terminus body with a proximal end, a distal end, and a passageway therebetween, and a lens received in the passageway. The passageway is configured to receive the ferrule therein so that a terminal end of the hollow-core optical fiber is positioned between the proximal and distal ends of the terminus body. The lens is configured to be located distally of the ferrule when the ferrule is received in the passageway. A fiber optic cable assembly having such a fiber optic connector and a method of terminating a hollow-core optical fiber with such a fiber optic connector are also disclosed.

## Description

### Priority Application

This application claims the benefit of priority of U.S. Provisional Application No. 63/677,583, filed on July 31, 2024, the content of which is relied upon and incorporated herein by reference in its entirety.

### Technical Field

This disclosure relates generally to optical connectivity, and more particularly to a fiber optic connector that performs the dual function of terminating a hollow-core optical fiber and sealing the end face of the hollow-core optical fiber, a fiber optic cable assembly having a fiber optic connector that terminates and seals a hollow-core optical fiber, and to a method for terminating a hollow-core optical fiber with such a fiber optic connector.

### Background

Optical fibers are useful in a wide variety of applications, including the telecommunications industry for voice, video, and data transmissions. Benefits of optical fibers include wide bandwidth and low noise operation. Traditional optical fibers include a solid core and a solid cladding that surrounds the core. The core and cladding are typically made of fused silica doped so that the core has a higher index of refraction than the cladding. The core and cladding of the optical fiber are thereby configured to define an optical waveguide that generally confines optical beams propagating through the optical fiber to a region of the optical fiber within and immediately adjacent to the core.

Hollow-core optical fibers are a relatively new type of optical fiber that guides light through a hollow air-filled core rather than through a solid silica core. The latest hollow-core optical fiber designs include an anti-resonant structure that can confine light over a broader range of wavelengths as compared to earlier photonic bandgap hollow-core fibers. These anti-resonant structures enable lower-loss transmission over a wider usable wavelength window than previously available from hollow-core optical fibers. A double nested anti-resonant nodeless optical fiber

(DNANF) has been reported as having an attenuation level of 0.174 dB/km at 1550 nm, which is comparable to the performance of germanium doped all-glass fibers. In a more recent paper from OFC 2024, a hollow-core DNANF optical fiber was reported as having a loss of less than 0.11 dB/km. Thus, the performance of hollow-core optical fibers has become competitive with traditional solid-core optical fibers for long-haul transmission.

Hollow-core optical fiber has an effective index of refraction similar to that of air. As a result, light propagates through hollow-core optical fiber at essentially the same speed as light in vacuum (300,000 km/sec), which is about 50% faster than the speed at which light typically propagates through solid-core optical fiber (200,000 km/s). Thus, hollow-core optical fiber offers significantly reduced latency compared to solid-core optical fiber. Due to the improvements in signal loss and useable wavelengths resulting from recent research and development, as well as lower nonlinearity and Raleigh scattering, hollow-core optical fiber is becoming increasingly attractive for use in commercial applications for fiber optic networks.

While the use of hollow-core optical fibers provides a number of advantages in fiber optic network infrastructure, there remain a number of challenges that have limited their use in fiber optic networks. Current telecommunications systems require connection between the optical fibers and equipment or connection to other fiber optic cables. To provide these connections, fiber optic connectors are often provided on the ends of fiber optic cables to non-permanently connect and disconnect optical elements in a fiber optic network. The process of terminating individual optical fibers from a fiber optic cable is referred to as "connectorization." Connectorization can be done in a factory, resulting in a "pre-connectorized" or "pre-terminated" fiber optic cable, or the field (e.g., using a "field-installable" fiber optic connector).

While the equipment and components for terminating solid core optical fibers are well known in the telecommunications industry, such equipment and processes do not readily translate to hollow-core optical fibers. In this regard, for hollow-core optical fibers, it is important to keep the micro-hole (i.e., the hollow core) at the terminal end of the optical fiber clear of dirt, debris, moisture, oil, particulates, and other contaminants. Contamination of the micro-hole may disrupt the optical signal at the terminal end of the optical fiber, resulting in increased optical losses across the optical connection (e.g., to another optical fiber or optical device) at the terminal end of the optical fiber. Thus, for example, end face polishing used in conventional termination processes cannot be used with hollow-core optical fibers due to likely contamination of the hollow core. Additionally, some cleaving processes cannot be used with hollow-core optical fibers due to the risk of contamination of the hollow core.

In addition to the above, the terminal ends of hollow-core optical fibers must be kept free from liquids, e.g., moisture and condensation. For example, given the small size of optical fibers and their hollow cores, liquid present at the ends of the optical fibers may be wicked or drawn up into the optical fiber, potentially over long lengths of the optical fiber, due to capillary effects. The wicked liquid, which takes the form of a liquid film on the inner wall of the hollow-core fiber, may alter the light guiding mechanism of the optical fiber, leading to increased optical losses or inoperability in those regions.

Thus, to use hollow-core optical fibers in large-scale fiber optic networks, significant attention must be paid to the terminal ends of the hollow-core optical fibers. In this regard, there is a need in the telecommunication industry for improved systems and methods for sealing the ends of hollow-core optical fibers to prevent or reduce the ingress of contaminants into the hollow core of the fiber. There is also a need to integrate such sealing means into fiber optic connectors that provide an optical connection to other optical fibers or devices at an optical interface.

### Summary

In one aspect of the disclosure, a fiber optic connector for terminating at least one hollow-core optical fiber is disclosed. The fiber optic connector includes a ferrule having a proximal end, a distal end, and at least one fiber bore extending between the proximal end and the distal end. The at least one fiber bore is configured to receive the at least one hollow-core optical fiber. The fiber optic connector further includes a terminus having a terminus body with a proximal end, a distal end, and a passageway extending between the proximal end and the distal end and a lens received in the passageway of the terminus body. The passageway is configured to receive the ferrule therein so that a terminal end of the at least one hollow-core optical fiber is positioned between the proximal end and distal end of the terminus body. The lens is configured to be located distally of the ferrule when the ferrule is received in the passageway of the terminus body.

In one embodiment, the passageway of the terminus body may include an inlet portion adjacent the proximal end of the terminus body and may have a cross dimension greater than a cross dimension of the ferrule. In one embodiment, the inlet portion of the passageway may be sized to define an adhesive pocket disposed about the ferrule when the ferrule is received in the terminus. The adhesive pocket is configured to receive a curable adhesive to bond the ferrule to the terminus and to create a first seal for sealing the terminal end of the at least one hollow-core optical fiber. By way of example, the cross dimension of the inlet portion of the passageway may be between about 5% and about 20% greater than the cross dimension of the ferrule. Additionally, in one embodiment, a length of the inlet portion may be between about 15% and about 30% of the total length of the passageway in the terminus body.

In one embodiment, the passageway of the terminus body may include a lens portion adjacent the distal end of the terminus body and the lens portion may be configured to receive the lens therein. The lens may be, for example, a collimating lens, and more specifically, a spherical or cylindrical collimating lens. In one embodiment, the lens portion of the passageway may be sized to define an adhesive pocket disposed about the lens when the lens is received in the terminus. The adhesive pocket is configured to receive a curable adhesive to bond the lens to the terminus and to create a second seal for sealing the terminal end of the at least one hollow-core optical fiber. By way of example, the cross dimension of the lens portion of the passageway may be between about 5% and about 20% greater than a cross dimension of the lens. Additionally, in one embodiment, a length of the lens portion may be between about 10% and about 30% of the total length of the passageway in the terminus body.

In one embodiment, the passageway of the terminus body may include an intermediate portion between the proximal end and the distal end of the terminus body, and the intermediate portion may have a cross dimension just slightly larger than a cross dimension of the ferrule. In one embodiment, the intermediate portion may be sized to allow sliding movement of the ferrule within the passageway so that the position of the ferrule relative to the lens may be adjustable. Additionally, in one embodiment, a length of the intermediate portion may be between about 40% and about 70% of the total length of the passageway in the terminus body.

In one embodiment, the cross dimension of the lens portion of the passageway may be greater than the cross dimension of the inlet portion of the passageway. The cross dimension of the lens portion of the passageway may also be greater than the cross dimension of the intermediate portion of the passageway. Moreover, the cross dimension of the inlet portion of the passageway may be greater than the cross dimension of the intermediate passageway. In one embodiment, the lens portion of the passageway includes a transition portion that includes a seat for receiving and supporting the lens within the passageway.

In one embodiment, the fiber optic connector may further include a connector body, similar to fiber optic connectors for single mode, solid core optical fibers. In this embodiment, the ferrule and the terminus are configured to be positionable in the connector body to form the fiber optic connector.

In a second aspect of the disclosure, a fiber optic cable assembly is disclosed. The fiber optic cable assembly includes a fiber optic cable carrying a plurality of optical fibers, wherein at least one of the plurality of optical fibers is a hollow-core optical fiber, and at least one fiber optic connector according to the first aspect described above terminating the at least one hollow-core optical fiber.

In a third aspect of the disclosure, an optical interface is disclosed. The optical interface includes a first fiber optic cable assembly and a second fiber optic cable assembly each according to the second aspect described above, and an adapter body having at least one inlet port and at least one outlet port opposite to the at least one inlet port. The at least one first fiber optic connector of the first fiber optic cable assembly is received in the at least one inlet port of the adapter body and the at least one second fiber optic connector of the second fiber optic cable assembly is received in the at least one outlet port of the adapter body. Accordingly, an optical connection is made between the at least one first hollow-core optical fiber and the at least one second hollow-core optical fiber at the optical interface.

In one embodiment, the adapter body may include a sleeve, such as a split tube, positioned in the adapter body. The sleeve has a first end and a second end and is sized to receive the at least one first terminus of the at least one first fiber optic connector in the first end of the sleeve and the at least one second terminus of the at least one second fiber optic connector in the second end of the sleeve.

In yet a fourth aspect of the disclosure, a method of terminating a hollow-core optical fiber is disclosed. The method includes inserting an end of the hollow-core optical fiber in a fiber bore of a ferrule, bonding the hollow-core optical fiber to the ferrule, and providing a terminus, where the terminus includes a terminus body having a proximal end, a distal end, and a passageway extending between the proximal end and the distal end, and a lens positioned in the passageway adjacent the distal end of the terminus body. The method further includes inserting the ferrule into the passageway of the terminus so that the lens is distal of the ferrule and bonding the ferrule to the terminus body to form a first seal between the ferrule and the terminus.

In one embodiment, the method may further include assembling the terminus, where assembling the terminus includes inserting the lens into the passageway adjacent the distal end of the terminus body and bonding the lens to the terminus body to form a second seal between the lens and the terminus. The first seal and the second seal isolate the terminal end of the hollow-core optical fiber from the external environment to prevent or reduce contamination of the hollow core of the optical fiber.

In one embodiment, the method may further include, prior to bonding the ferrule to the terminus body, adjusting the position of the ferrule relative to the lens to optimize collimation of the light beam from the hollow-core optical fiber. In one embodiment, the method may further include inserting the ferrule/terminus subassembly into a connector body of a fiber optic connector. In an alternative embodiment, the terminus may be integrated in a fiber optic connector prior to inserting the ferrule into the passageway of the terminus.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a diagrammatic cross-sectional view of an exemplary hollow-core optical fiber.
Fig. 2 is a disassembled perspective view of a fiber optic connector according to an embodiment of the disclosure.
Fig. 3 is an assembled perspective view of a fiber/ferrule subassembly of the fiber optic connector shown in Fig. 2.
Fig. 4 is a disassembled perspective view of a terminus of the fiber optic connector shown in Fig. 2.
Fig. 5 is a cross-sectional view of the terminus shown in Fig. 4.
Fig. 6 is an assembled perspective view of the fiber optic connector shown in Fig. 2.
Fig. 7 is a cross-sectional view of the assembled fiber optic connector shown in Fig. 6.
Fig. 8 is a cross-sectional view of a terminus according to another embodiment of the disclosure.
Fig. 9 is a flowchart of a method of terminating a hollow-core optical fiber with the fiber optic connector shown in Fig. 6.
Fig. 10 is a cross-sectional view of an adapter with two fiber optic connectors connected an optical interface according to an embodiment of the disclosure.

It should be understood that the appended drawings are not necessarily to scale and may present a somewhat simplified representation of various features illustrative of the basic principles of the disclosure. For example, certain features illustrated by the drawings may be enlarged or distorted relative to others to facilitate visualization and a clear understanding.

### Detailed Description

Various embodiments will be further clarified by examples in the description below. In general, the description relates to a fiber optic connector for terminating a hollow-core optical fiber in a manner that not only allows the hollow-core optical fiber to be easily and conveniently connected to another hollow-core optical fiber or optical device, but also seals the end face of the hollow-core optical fiber to prevent contaminants from entering the hollow core of the optical fiber. This is generally achieved by using a terminus to hermetically seal the end face of the hollow-core optical fiber. More particularly, the hollow-core optical fiber is configured to be received in a ferrule of a fiber optic connector such that the end face of the optical fiber is adjacent the end face of the ferrule, as is customary. The ferrule is then configured to be received in the terminus such that the ferrule end face is positioned between a proximal end and a distal end of the terminus. A distal end of the terminus receives a lens, such as a spherical collimating lens. The lens is received in the terminus and bonded thereto with a curable adhesive to form a seal therebetween. The proximal end of the terminus includes an adhesive pocket disposed about the ferrule which receives curable adhesive to form another seal. Thus, the end face of the hollow-core optical fiber is positioned between the two seals so as to isolate the end face from the external environment, thereby eliminating or reducing the likelihood of contaminating the hollow core of the optical fiber.

Additionally, the ferrule and terminus form a subassembly that may operate as the fiber optic connector or as part of the fiber optic connector. For example, the ferrule/terminus subassembly may be received in a connector body of a fiber optic connector similar to how ferrules are currently received in connector bodies of fiber optic connectors. In this case, the connector bodies are modified so as to receive the ferrule/terminus subassembly instead of just the ferrule. In this way, the fiber optic connector terminating the hollow-core optical fiber may be used in a manner similar to that of solid-core optical fibers. In this regard, for example, an adapter for connecting two fiber optic connectors that terminate hollow-core optical fibers may be introduced at an optical interface. The adapter may include a sleeve (e.g., a split tube) that is configured to receive the terminus of the two opposed fiber optic connectors in a manner similar to traditional adapters with sleeves that currently receive ferrules. Aspects of the fiber optic cable assemblies having such fiber optic connectors, and related methods, are described in more detail below.

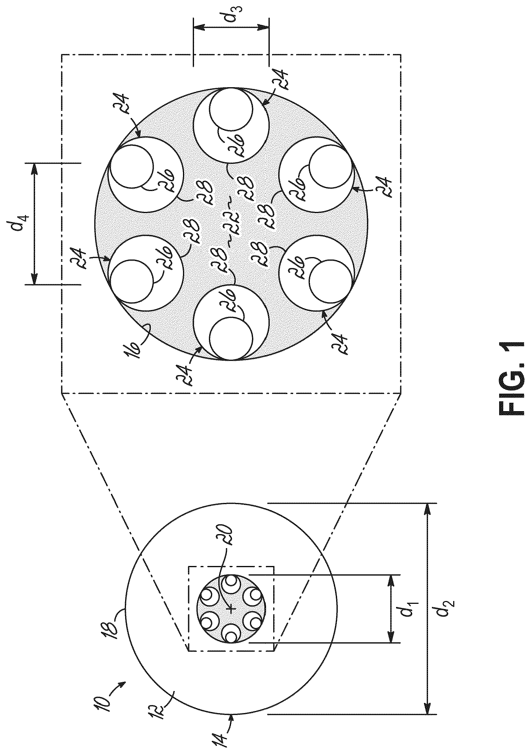

Fig. 1 depicts an axial cross-sectional view of an exemplary hollow-core optical fiber 10. The hollow-core optical fiber 10 includes a cladding 12 that defines a fiber body 14 having an inner surface 16, an outer surface 18, and an optical axis 20. The inner surface 16 of the fiber body 14 defines a micro-bore or hollow core 22. The hollow-core optical fiber 10 may further include a plurality of structural tubes 24 (also called capillaries) arranged circumferentially along the inner surface 16 of the fiber body 14. The depicted embodiment includes six structural tubes 24 each including a nested structure having an inner tube 26 and an outer tube 28. However, it should be understood that the hollow-core optical fiber 10 may be used with other numbers of structural tubes 24, as well as structural tubes 24 that comprise a single tube (i.e., are unnested) or include more than two nested tubes.

The cladding 12 and structural tubes 24 may be formed, for example, of doped or undoped silica glass. The hollow-core fiber body 14 defined by the cladding 12 may have an inner diameter d₁ and an outer diameter d₂, and the structural tubes 24 may have an outer diameter d₃. The dimensions of the cladding 12 and structural tubes 24 may be selected so that the hollow core 22 has a diameter d₄. The dimensions and other characteristics of the cladding 12 and structural tubes 24 (e.g., the refractive index or indices) may be selected to define a waveguide that generally confines optical beams propagating through the hollow-core optical fiber 10 to the hollow core 22 itself. The thicknesses of the walls of the structural tubes 24 may be selected to provide an anti-resonant effect that reduces leakage of optical beams from the hollow core 22 into the structural tubes 24. This anti-resonant effect may be optimized by providing the structural tubes 24 with a wall thickness that is an odd multiple of a quarter wavelength of the optical beam. In an exemplary embodiment of the depicted hollow-core optical fiber 10, d₁ may be about 100 µm, d₂ may be about 250 µm, d₃ may be about 30 µm, and d₄ may be about 40 µm. However, the optical fiber disclosed herein is not limited to hollow-core optical fibers 10 having a particular set of structural dimensions.

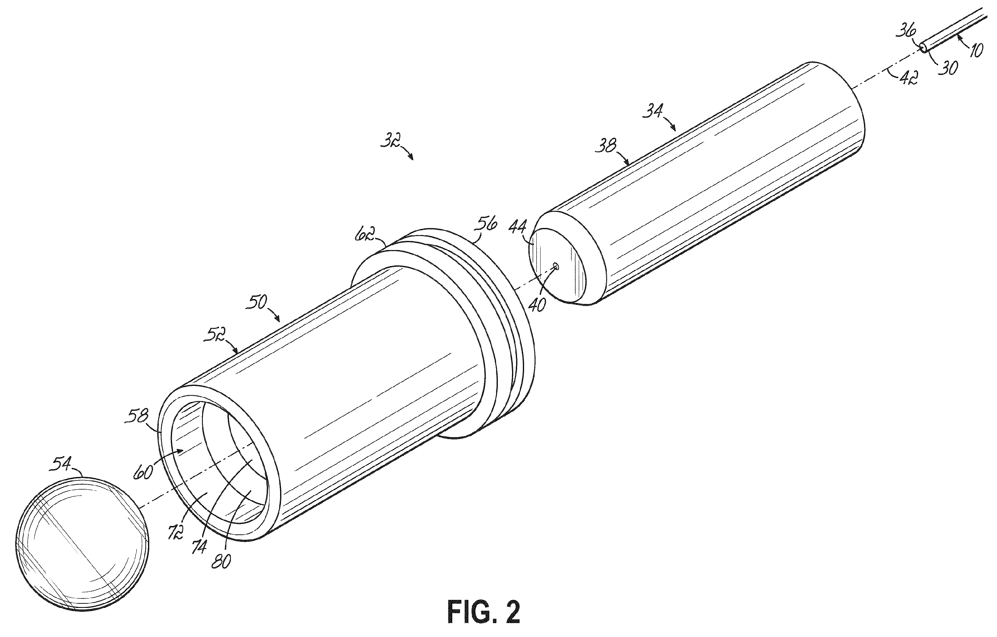

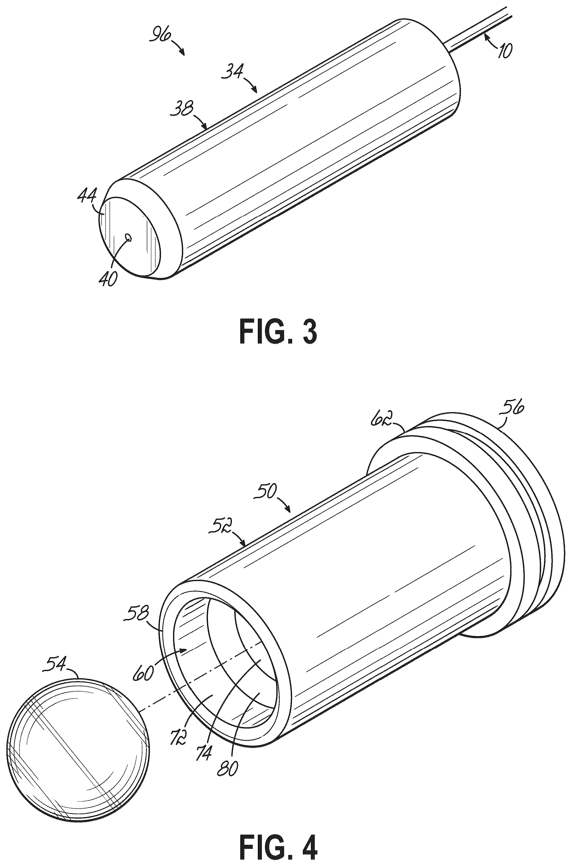

As noted above, one of the challenges of using hollow-core optical fiber on a large commercial scale is preventing contamination at the terminal end of the optical fiber. Figs. 2-8 illustrate the sealing of a terminal end 30 of the hollow-core optical fiber 10 in accordance with an embodiment of the disclosure. In this regard, the "seal" for the hollow-core optical fiber 10 is integrated with a fiber optic connector 32 attached to the terminal end 30 of the optical fiber 10. Thus, the fiber optic connector 32 provides a dual function in that the connector 32 not only connectorizes the hollow-core optical fiber 10 but also seals the terminal end 30 of the hollow-core optical fiber 10. In this regard, as shown in Figs. 2 and 3, the fiber optic connector 32 includes a ferrule 34 configured to receive the hollow-core optical fiber 10 therein and present an end face 36 of the hollow-core optical fiber 10 for optical connection to another optical fiber and/or optical device across an optical interface. In this regard, the ferrule 34 includes an elongate ferrule body 38 having a fiber bore 40 extending along a longitudinal axis 42 of the ferrule 34 from a proximal end of the ferrule 34 to a distal end of the ferrule 34 that is configured to receive the hollow-core optical fiber 10 therein. The distal end of the ferrule 34 defines an end face 44 for presentation of the end face 36 of the optical fiber 10.

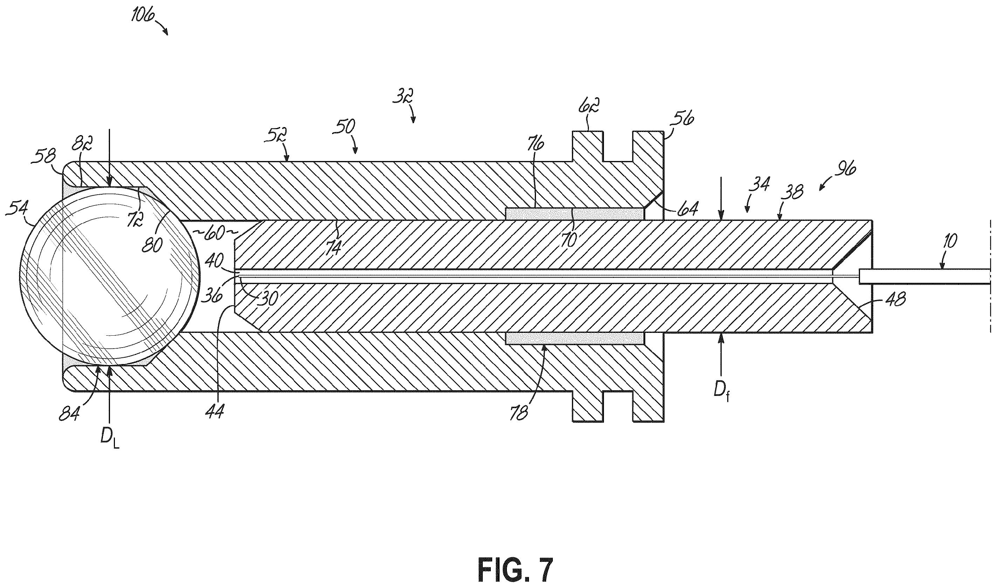

Ferrules and fiber bores, and the devices used to make ferrules and fiber bores, are well known in the telecommunications industry and a detailed discussion of making such ferrules will be omitted for sake of brevity. Such processes for making a ferrule 34 and fiber bore 40 may be similar to current processes but for the fiber bore 40 being generally larger to accommodate the larger outer diameter, e.g., d₂, of hollow-core optical fibers 10. In this regard, the hollow-core optical fiber 10 may be inserted into and through the fiber bore 40 to define a fiber stud (not shown) that extends past the end face 44 of the ferrule 34. The hollow-core optical fiber 10 may be bonded within the fiber bore 40 by applying a curable adhesive into the fiber bore 40 at the proximal end of the ferrule 34 (i.e., opposite the end face 44). In this regard, the proximal end of the ferrule 34 may include an adhesive pocket 48 (Fig. 7) configured to receive adhesive for connecting the hollow-core optical fiber 10 to the ferrule 34. The fiber stub that extends beyond the end face 44 of the ferrule 34 may be cleaved, such as by a laser cleaving process (e.g., Bessel beam CO₂ laser) so as to prevent or reduce contamination of the hollow core 22 of the optical fiber 10 during the cleaving process.

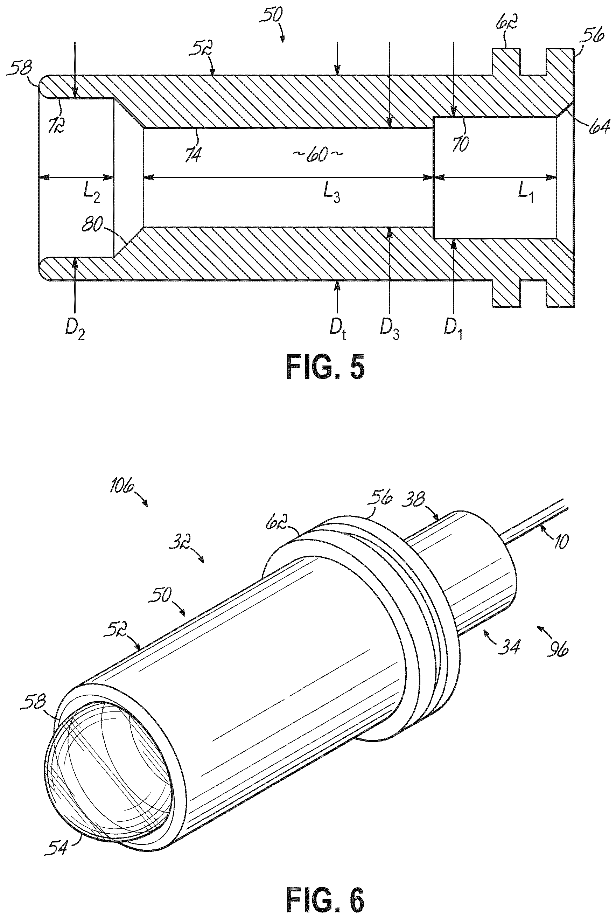

As shown in Figs. 4-6, to seal the terminal end 30 of the hollow-core optical fiber 10, which is adjacent the end face 44 of the ferrule 34, the fiber optic connector 32 includes a terminus 50 configured to receive the distal end of the ferrule 34 and create a seal that prevents dirt, debris, moisture, etc. from entering the hollow core 22 of the optical fiber 10. In other words, when the ferrule 34 is connected to the terminus 50, the terminal end 30 of the hollow-core optical fiber 10 is isolated from the external environment, thereby eliminating or reducing the ingress of contaminants into the hollow core 22 of the optical fiber 10. As illustrated in Figs. 4 and 5, in an exemplary embodiment, the terminus 50 includes a terminus body 52 and a lens 54 received at an end of the terminus body 52. The terminus body 52 may be generally tubular and includes a proximal end 56, a distal end 58, and a passageway 60 that extends between the proximal end 56 and the distal end 58. In one embodiment, the terminus body 52 may be generally circular in cross section. This is merely exemplary, however, and the terminus body 52 may have different cross-sectional shapes and remain within the scope of the present disclosure. In the illustrated embodiment, the outer diameter Dₜ of the terminus body 52 may be between about 30% and 150% greater than the outer diameter D_{f} of the ferrule 34 that is received in the terminus 50. In one embodiment, the proximal end 56 of the terminus body 52 may include an outer collar 62. The collar 62 may aid in integrating the terminus 50 within the fiber optic connector 32. By way of example, the fiber optic connector 32 may include a connector body (not shown) which includes a cavity configured to receive the terminus 50. The collar 62 may facilitate placement of the terminus 50 within the connector body and prevent undesirable movements of the terminus 50 within the connector body.

The passageway 60 includes a plurality of sections from the proximal end 56 to the distal end 58 of the terminus body 52. In accordance with one embodiment of the disclosure, for example, the passageway 60 may include an inlet portion 70 adjacent the proximal end 56 of the terminus body 52, a lens portion 72 adjacent the distal end 58 of the terminus body 52, and an intermediate portion 74 between the inlet portion 70 and the lens portion 72. Each of the passageway portions 70, 72, 74 may be generally circular in cross-sectional shape but the cross dimension (e.g., their diameters D₁, D₂, D₃) of each of the passageway portions 70, 72, 74 may be different from their adjacent passageway portions 70, 72, 74. Moreover, the length L₁, L₂, L₃ of each of the passageway portions 70, 72, 74 may be different from their adjacent passageway portions 70, 72, 74. In one embodiment, the inlet portion 70 may have a diameter D₁ that is between about 5% and about 20% greater than the outer diameter D_{f} of the ferrule 34 that is received in the terminus 50. This excess radial dimension creates an outer cylindrical pocket 76 disposed about the ferrule 34 when the ferrule 34 is received therein. The outer cylindrical pocket 76 is configured to receive a curable adhesive in order to bond the ferrule 34 to the terminus 50. Since the hollow-core optical fiber 10 is bonded to the ferrule 34 at the proximal end of the ferrule 34 and the ferrule 34 is bonded to the terminus 50 along the inlet portion 70 of the terminus passageway 60, a first hermetic seal 78 is formed on the "proximal side" of the terminal end 30 of the hollow-core optical fiber 10. In one embodiment, the inlet portion 70 may include a chamfer 64 immediately adjacent the proximal end 56 of the terminus body 52. Alternatively, the chamfer 64 may be omitted. In one embodiment, the length L₁ of the inlet portion 70 may be between about 15% and about 30% of the total length Lₜ of the terminus 50 and may be dictated by the length (e.g., as part of the surface area) required for the curable adhesive to adequately fix the ferrule 34 to the terminus 50. Other lengths L₁ of the inlet portion 70, however, may also be possible and remain within the scope of the present disclosure.

In one embodiment, the lens portion 72 of the passageway 60 may have a diameter D₂ that is between about 20% and about 130% greater than the outer diameter D_{f} of the ferrule 34 that is received in the terminus 50. In an exemplary embodiment, the diameter D₂ of the lens portion 72 is generally greater than the diameter D₁ of the inlet portion 70. As can be seen in Figs. 6 and 7, the lens portion 72 of the passageway 60 is configured to receive the lens 54, as will be discussed in more detail below. Thus, the diameter D₂ of the lens portion 72 may be dictated by the size of the lens 54 that is received in the terminus 50. By way of example, and as will be explained more fully below, the diameter D₂ of the lens portion 72 may be between about 5% and about 20% greater than the cross dimension of the lens 54 (e.g., the outer diameter D_{L} of the lens 54). Moreover, the length L₃ of the lens portion 72 may be between about 10% and about 25% of the length Lₜ of the terminus 50 and may be dictated by the size of the lens 54 that is received in the terminus 50. Generally, the length L₂ of the lens portion 72 may be less than the length L₁ of the inlet portion 70. Other lengths L₂ of the lens portion 72, however, may also be possible and remain within the scope of the present disclosure.

As noted above, the intermediate portion 74 of the passageway 60 is disposed between the inlet portion 70 and the lens portion 72. In an exemplary embodiment, the intermediate portion 74 may have an outer diameter D₃ that is just slightly larger (e.g., larger by less than about 5%) of the diameter D_{f} of the ferrule 32, such that the intermediate portion 74 of the passageway 60 is configured to snugly but slidably receive the ferrule 34 therein. In one embodiment, the diameter D₃ of the intermediate portion 74 may generally be less than the diameter D₁ of the inlet portion 70 and less than the diameter D₂ of the lens portion 72. Moreover, in one embodiment, the lens portion 72 of the passageway 60 may include a transition portion 80 (e.g., chamfer) to gradually increase the diameter of the passageway 60 from D₃ in the intermediate portion 74 to D₂ in the outer part of the lens portion 72. The transition region 80 may also operate as a seat for receiving the lens 54 of the terminus 50 and supporting the lens 54 within the passageway 60. In one embodiment, the length L₃ of the intermediate region 74 may be between about 40% and about 70% of the length Lₜ of the terminus 50. Generally, the length L₃ of the intermediate portion 74 may be greater than the length L₁ of the inlet portion 70 and the length L₂ of the lens portion 72. Other lengths L₃ of the intermediate portion 74, however, may also be possible and remain with the scope of the present disclosure.

When light leaves the terminal end 30 of the hollow-core optical fiber 10 at the distal end of the ferrule 34, the light beam starts to diverge in free space. The purpose of the lens 54 is to collimate the diverging light beam that leaves the terminal end 30 of the hollow core optical fiber 10. In this regard, the lens 54 may be a collimating lens that provides an expanded optical beam having the characteristics of a free-space Gaussian beam. In one embodiment, for example, the lens 54 may be a spherical collimating lens. Spherical collimating lenses are known in the telecommunications industry and a description of how such lenses collimate a diverging light beam will not be further described herein. In an alternative embodiment, other types of collimating lenses may be used in the terminus 50 and aspects of the disclosure should not be limited to spherical collimating lenses. In addition, in one embodiment, the lens 54 may include one or more coatings that reduce optical reflections. For example, the lens 54 may include an anti-reflective coating.

As noted above, the lens 54 is positioned in the lens portion 72 of the passageway 60 of the terminus 50. In this regard, the diameter D₂ of the lens portion 72 of the passageway 60 is slightly larger than the outer diameter D_{L} of the lens 54. As shown in Fig. 7, this creates an outer cylindrical pocket 82 disposed about the periphery of the lens 54 that is configured to receive a curable adhesive in order to bond the lens 54 to the terminus 50. The transition portion 80 defines a seat that engages with the lens 54 to create a preliminary seal or barrier 84 that prevents adhesive from flowing past the lens 54 and toward the terminal end 30 of the hollow-core optical fiber 10. The seat defined by the transition portion 80 may also aid in aligning the lens 54 relative to the terminus body 52. Since the lens 54 is bonded to the terminus 50 adjacent the distal end 58 of the terminus body 52 and along the lens portion 72 of the terminus passageway 60, a second hermetic seal 84 is formed on the "distal side" of the terminal end 30 of the hollow-core optical fiber 10. Thus, when the ferrule 34 is bonded to the terminus 50 and the lens 54 is bonded to the terminus 50, the terminal end 30 of the hollow-core optical fiber 10 is positioned within the intermediate portion 74 of the terminus passageway 40 and is hermetically sealed on both sides thereof by proximal seal 78 and distal seal 84. In this way, dirt, debris, liquids, moisture, etc. are prevented from contaminating the hollow core 22 of the optical fiber 10.

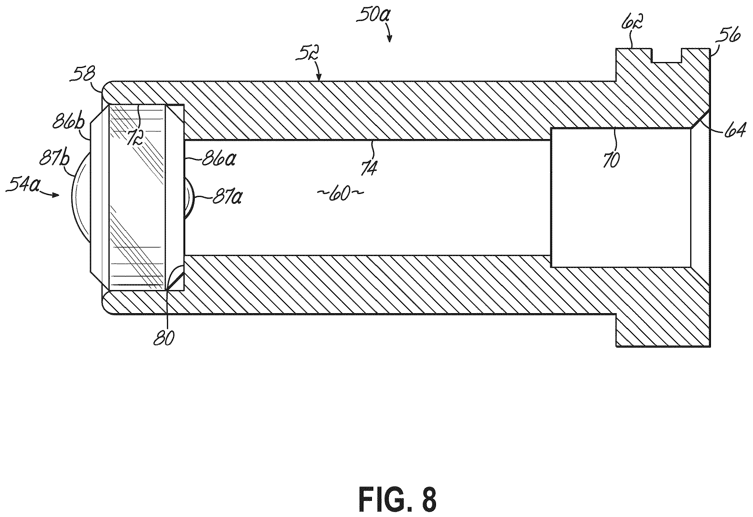

Fig. 8 illustrates a terminus 50a in accordance with another embodiment, where like reference numbers refer to like features relative to the embodiment shown in Figs. 4-7. The primary difference in the embodiment shown in Fig. 8 is the configuration of the lens in the terminus 50a. In the previous embodiment, the lens 54 was described as a spherical lens. In this embodiment, however, the lens 54a may have a generally cylindrical configuration that defines an inner face 86a that faces the hollow-core optical fiber 10 and an outer face 86b that faces away from the hollow-core optical fiber 10. In one embodiment, the inner face 86a and outer face 86b may be generally flat. Each of the inner face 86a and outer face 86b may include a lens portion 87a, 87b, respectively, that operates as the active portion of the lens 54a. In various embodiments, the lens portion 87a may be shaped so as to be spherical, concave, convex, or flat. In a similar manner and in various embodiments, the outer surface 86b may be shaped so as to be spherical, concave, convex, or flat. In one embodiment, for example, the lens portions 87a, 87b may be aspherical lenses. Also in this embodiment, the transition portion 80 of the passageway 64 may also be flat to seat the lens 54a in the terminus 50 and aid in aligning the lens 54a relative to the terminus body 52.

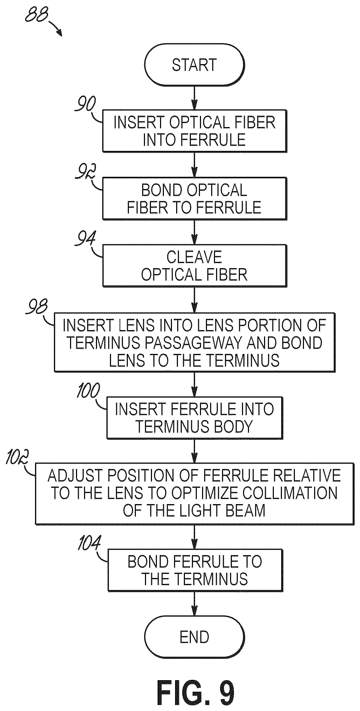

Fig. 9 is a flow chart that illustrates a method 88 of terminating a hollow-core optical fiber 10 in accordance with that described above. In a first step 90, the hollow-core optical fiber 10 may be coupled to the ferrule 34 of the fiber optic connector 32. As explained above, the end of the hollow-core optical fiber 10 may be inserted through a fiber bore 40 in the ferrule 34 such that a small length extends beyond the end face 44 of the ferrule 34. In a next step 92, the hollow-core optical fiber 10 may be connected to the ferrule 34. For example, a curable adhesive may be introduced at the proximal end of the ferrule 34, such as in the adhesive pocket 48 at the proximal end of the ferrule 34, to bond the hollow-core optical fiber 10 to the ferrule 34. In a next step 94, the end 30 of the hollow-core optical fiber 10 may be cleaved such that the end face 36 of the hollow-core optical fiber 10 is flush or just beyond (e.g., between about 0.05 mm to about 0.25 mm) the end face 44 of the ferrule 34. This creates a fiber/ferrule subassembly 96. As noted above, the hollow-core optical fiber 10 may be laser cleaved to prevent or reduce the likelihood of contaminating the hollow core 22 of the optical fiber 10.

To seal off the terminal end 30 of the hollow-core optical fiber 10, the fiber/ferrule subassembly 96 is connected to the terminus 50. To assemble the terminus 50, the lens 54 may be connected to the terminus body 52. More particularly, in a further step 98 of the method 88, the lens 54 may be inserted into the lens portion 72 of the passageway 60 at the distal end 58 of the terminus body 52. In this regard, the lens 54 may engage and be supported by the seat created by the transition portion 80 of the passageway 60 to provide the cylindrical pocket 82 disposed about the periphery of the lens 54. A curable adhesive may be introduced at the distal end 58 of the terminus body 52 so as to at least partially fill and preferably substantially fill the cylindrical pocket 82. Upon curing, the adhesive not only bonds the lens 54 to the terminus body 52 but also creates a seal at the distal end 58 of the terminus body 52.

Once the terminus 50 is assembled, the fiber/ferrule subassembly 96 may then be connected to the terminus 50. In this regard, and in a further step 100, the distal end of the ferrule 34 may be inserted into the proximal end 56 of the terminus body 52 and through the inlet portion 70 of the passageway 60 such that the end face 44 of the ferrule 34 slidably resides in the intermediate portion 74 of the passageway 60. The position of the end face 44 of the ferrule 34 must then be set so that the (diverging) light beam emerging from the hollow-core optical fiber 10 is optimally collimated by the lens 54. This position may be found, for example, by trial and error. In this regard, in a next step 102 of the method 88, the position of the end face 44 of the ferrule 34 may be slidably adjusted relative to the lens 54 within the intermediate portion 74 of the passageway 60 until the optical beam from the hollow-core optical fiber 10 is optimally collimated (i.e., the light rays emerging from the lens 54 are straight). Once that optimal position of the end face 44 of the ferrule 34 relative to the lens 54 is located, the ferrule 34 may be connected to the terminus 50. In this regard, in another step 104, a curable adhesive may be introduced into the proximal end 56 of the terminus body 52 so as to at least partially and preferably substantially fill the cylindrical pocket 76 disposed about the ferrule 34 in, for example, the inlet portion 70 of the passageway 60. Upon curing, the adhesive not only bonds the ferrule 34 to the terminus body 52 but also creates a seal at the proximal end 56 of the terminus body 52. This creates a ferrule/terminus subassembly 106.

As noted above, the seal between the ferrule 34 and the terminus body 52 at the proximal end 56 of the terminus body 52 creates a first hermetic seal 78 for isolating the terminal end 30 of the hollow-core optical fiber 10 from the external environment. Additionally, the seal between the lens 54 and the terminus body 52 at the distal end 58 of the terminus body 52 creates a second hermetic seal 84 for isolating the terminal end 30 of the hollow-core optical fiber 10 from the external environment. Thus, the terminal end 30 of the hollow-core optical fiber 10 is sealed on both the proximal side and the distal side of the terminal end 30 to prevent contaminants from accessing the hollow core 22 of the hollow-core optical fiber 10.

In one embodiment, the terminus 50 may be integrated within the fiber optic connector 32 (i.e., preassembled with the connector body of the fiber optic connector 32) prior to connecting the ferrule 32 to the terminus body 52. In this way, for example, when the ferrule 34 is connected to the terminus body 52, the ferrule/terminus subassembly 106 is already integrated in the connector body of the fiber optic connector 32. In an alternative embodiment, however, the ferrule/terminus subassembly 106 may be formed separately from the fiber optic connector 32, and that ferrule/terminus subassembly 106 subsequently integrated with the connector body of the fiber optic connector 32. In either embodiment, the hollow-core optical fiber 10 is terminated by a fiber optic connector 32 including at least the ferrule/terminus subassembly 106, and preferably the ferrule/terminus subassembly 106 positioned within a connector body of the fiber optic connector 32. This will allow, for example, the fiber optic connectors 32 from two different fiber optic cables having hollow-core optical fibers 10 to be connected at an optical interface in a manner similar to that of solid-core optical fibers. Such an optical interface will be described in more detail below. Additionally, the fiber optic connector 32 including at least the ferrule/terminus subassembly 106 seals the terminal end 30 of the hollow-core optical fiber 10 and prevents the ingress of contaminants into the hollow core 22 of the optical fiber 10.

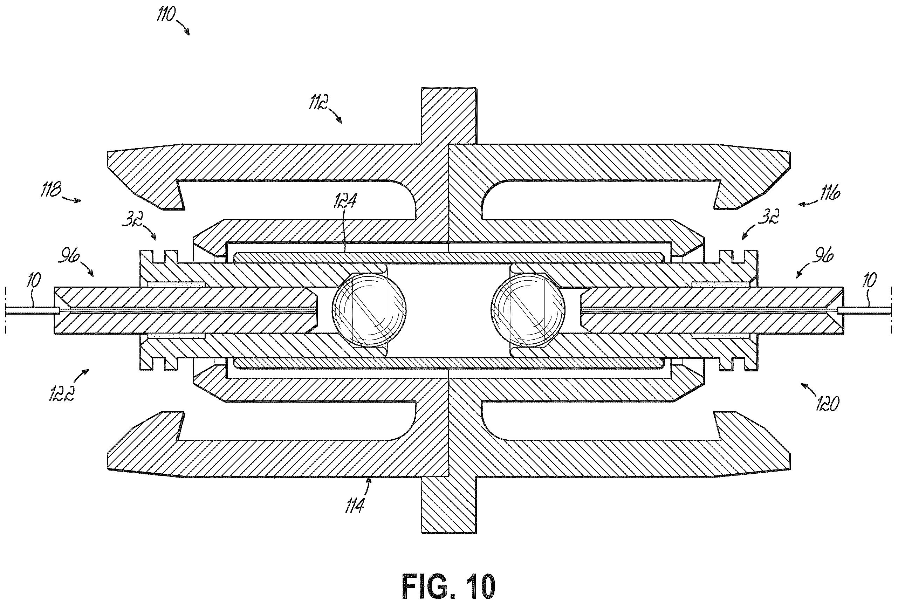

The fiber optic connector 32 allows the hollow-core optical fiber 10 to be connected to, for example, another hollow-core optical fiber 10 having a fiber optic connector 32 at an optical interface 110. In an exemplary embodiment, and as shown in Fig. 10, the optical interface 110 may include an adapter 112. The adapter 112 includes an adapter body 114 having at least one inlet port 116 and at least one outlet port 118 opposite to the at least one inlet port 116. The adapter 112 is configured to receive a first fiber optic cable assembly 120 carrying at least one first hollow-core optical fiber 10 and terminated by at least one first fiber optic connector 32. The adapter 112 is further configured to receive a second fiber optic cable assembly 122 carrying at least one second hollow-core optical fiber 10 and terminated by at least one second fiber optic connector 32. The at least one first fiber optic connector 32 from the first fiber optic cable 120 may be received in the at least one inlet port 116 of the adapter 112. In this regard, the ferrule/terminus subassembly 106 of the fiber optic connector 32 from the first fiber optic cable assembly 120 is received within a sleeve 124 located within the adapter body 114. In one embodiment, the sleeve 124 may be a split tube commonly used in existing adapters. The split tubes, however, are sized to receive the terminus 50 of the fiber optic connector 32. In a similar manner, the at least one second fiber optic connector 32 from the second fiber optic cable assembly 122 may be received in the at least one outlet port 118 of the adapter 112. In this regard, the ferrule/terminus subassembly 106 of the fiber optic connector 32 from the second fiber optic cable assembly 122 is received within the sleeve 124 located within the adapter body 114. The two hollow-core optical fibers 10 are in communication across the optical interface 110 when the fiber optic connectors 32 from the respective first and second fiber optic cable assemblies 120, 122 are received in the inlet and outlet ports 116, 118 of the adapter 112.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The present disclosure in its broader aspects is therefore not limited to the specific details, representative apparatus and methods and illustrative examples shown and described. Accordingly, departures may be made from such details without departing from the scope of the present disclosure.

## Claims

1. A fiber optic connector for terminating at least one hollow-core optical fiber, comprising:
a ferrule having a proximal end, a distal end, and at least one fiber bore extending between the proximal end and the distal end, the at least one fiber bore configured to receive the at least one hollow-core optical fiber;
a terminus, comprising:
a terminus body having a proximal end, a distal end, and a passageway extending between the proximal end and the distal end, wherein the passageway is configured to receive the ferrule therein so that a terminal end of the at least one hollow-core optical fiber is positioned between the proximal end and distal end of the terminus body; and
a lens received in the passageway of the terminus body, wherein the lens is configured to be located distally of the ferrule when the ferrule is received in the passageway of the terminus body.

2. The connector of claim 1, wherein the passageway includes an inlet portion adjacent the proximal end of the terminus body, wherein the inlet portion has a cross dimension greater than a cross dimension of the ferrule.

3. The connector of claim 2, wherein the inlet portion of the passageway is sized to define an adhesive pocket disposed about the ferrule when the ferrule is received in the terminus, the adhesive pocket configured to receive a curable adhesive to bond the ferrule to the terminus and to create a first seal for sealing the terminal end of the at least one hollow-core optical fiber.

4. The connector of claim 2 or 3, wherein the cross dimension of the inlet portion of the passageway is between about 5% and about 20% greater than the cross dimension of the ferrule.

5. The connector of any of claims 2-4, wherein a length of the inlet portion is between about 15% and about 30% of the total length of the passageway in the terminus body.

6. The connector of any of the preceding claims, wherein the passageway includes a lens portion adjacent the distal end of the terminus body, wherein the lens portion is configured to receive the lens therein.

7. The connector of claim 6, wherein the lens portion of the passageway is sized to define an adhesive pocket disposed about the lens when the lens is received in the terminus, the adhesive pocket configured to receive a curable adhesive to bond the lens to the terminus and to create a second seal for sealing the terminal end of the at least one hollow-core optical fiber.

8. The connector of claim 6 or 7, wherein the lens portion of the passageway has a cross dimension between about 5% and about 20% greater than a cross dimension of the lens.

9. The connector of any of claims 2-4, wherein a length of the lens portion is between about 10% and about 30% of the total length of the passageway in the terminus body.

10. The connector of any of the preceding claims, wherein the passageway includes an intermediate portion between the proximal end and the distal end of the terminus body, wherein the intermediate portion has a cross dimension just slightly larger than a cross dimension of the ferrule;
wherein the intermediate portion is sized to allow sliding movement of the ferrule within the passageway so that the position of the ferrule relative to the lens may be adjustable.

11. The connector of claim 10, wherein a length of the intermediate portion is between about 40% and about 70% of the total length of the passageway in the terminus body.

12. The connector of any of the preceding claims, wherein the fiber optic connector further comprises a connector body, wherein the ferrule and the terminus are positionable in the connector body.

13. A fiber optic cable assembly, comprising:
a fiber optic cable carrying a plurality of optical fibers, wherein at least one of the plurality of optical fibers is a hollow-core optical fiber; and
at least one fiber optic connector according to any of claims 1-12 terminating the at least one hollow-core optical fiber of the plurality of optical fibers carried by the fiber optic cable.

14. An optical interface, comprising:
a first fiber optic cable assembly and a second fiber optic cable assembly each according to claim 13;
an adapter body having at least one inlet port and at least one outlet port opposite to the at least one inlet port;
wherein the at least one first fiber optic connector of the first fiber optic cable assembly is received in the at least one inlet port of the adapter body,
wherein the at least one second fiber optic connector of the second fiber optic cable assembly is received in the at least one outlet port of the adapter body, and
whereby an optical connection is made between the at least one first hollow-core optical fiber and the at least one second hollow-core optical fiber at the optical interface.

15. The optical interface of claim 14, wherein the adapter body comprises:
a sleeve having a first end and a second end positioned in the adapter body,
wherein the sleeve is sized to receive:
the at least one first terminus of the at least one first fiber optic connector in the first end of the sleeve, and
the at least one second terminus of the at least one second fiber optic connector in the second end of the sleeve.
